# EUROPÄISCHE PATENTSCHRIFT

(11) **EP 1 413 869 B1**
(45) Veröffentlichungstag und Bekanntmachung des Hinweises auf die Patenterteilung: **05.10.2005**
(21) Anmeldenummer: 03011572.9
(22) Anmeldetag: 22.05.2003
(51) Int. Cl.: G01M 3/00, G01M 17/08, G01M 3/02

(54) **Verfahren zur Ortung von Undichtigkeiten von Fahrzeugen**
Method for localizing leaks in vehicles
Procédé de localisation des fuites dans des véhicules

(30) Priorität: 27.08.2002 DE 10239995
(43) Veröffentlichungstag der Anmeldung: 28.04.2004
(73) Patentinhaber: DB Fernverkehr AG, 60326 Frankfurt (DE)
(72) Erfinder: Berlitz, Tim, 86529 Schrobenhausen (DE); Meister, Michael, 32457 Porta Westfalica (DE)
(74) Vertreter: Zinken-Sommer, Rainer

(56) Entgegenhaltungen:
- EP-A- 0 016 656
- WO-A-02/04912

## Beschreibung

Die Erfindung betrifft ein Verfahren zur Ortung von Undichtigkeiten von Fahrzeugen. Hierbei werden unter Undichtigkeiten die Undichtigkeiten der Abdichtung eines Luftvolumens eines Innenraums gegenüber dem Luftvolumen eines Außenraums eines Fahrzeugs verstanden.

Eine Dichtheit von Fahrzeugen ist erforderlich, wenn Fahrzeuge mit hoher Geschwindigkeit in eine Querschnittsveränderung einfahren oder innerhalb einer Querschnittsverengung fahren. Eine solche Querschnittsveränderung stellt insbesondere die Einfahrt in einen Tunnel, die Ausfahrt aus einem Tunnel oder die Begegnung im Tunnel mit einem anderen Fahrzeug dar. Ist das Fahrzeug vollkommen undicht, so treten hierdurch im Innenraum des Fahrzeuges Schwankungen des Luftdruckes zur gleichen Zeit und in gleicher Höhe wie im Außenraum des Fahrzeuges auf, die von den Fahrgästen als störend empfunden werden und somit den Fahrkomfort beeinträchtigen. Bei einem dichten Fahrzeug treten diese Schwankungen des Luftdruckes im Innenraum des Fahrzeuges zeitlich verzögert und mit einer sehr langsamen Anpassung an den Luftdruck des Außenraum des Fahrzeuges auf. Somit werden sie von den Fahrgästen nicht wahrgenommen und beeinträchtigen den Fahrkomfort nicht.

Für einen guten Fahrkomfort ist es somit erforderlich, Hochgeschwindigkeitszüge hinreichend dicht zu gestalten und hinreichend dicht zu erhalten. Durch Alterungsprozesse und Abnutzung des Fahrzeugmaterials vermindert sich jedoch eine Dichtigkeit von Fahrzeugen mit der Zeit und es treten Undichtigkeiten insbesondere an Tür- und Fensterdichtungen auf. Diese Undichtigkeiten müssen frühzeitig geortet werden, um sie abzudichten und einen hohen Fahrkomfort zu sichern.

Stand der Technik im Bereich der Gebäudetechnik ist das sog. Blower-Door-Verfahren, das insbesondere aus der internationalen Norm ISO 9972 "Wärmedämmung - Bestimmung der Luftdurchlässigkeit der Gebäudehülle - Differenzdruck-Methode" bekannt ist. Bei diesem Verfahren wird in eine Gebäudeöffnung, insbesondere eine Tür oder ein Fenster, ein Gebläse eingesetzt und der Innenraum des Hauses mit einem Überdruck von 50 Pa gegenüber dem Außenraum beaufschlagt. Aus dem Gebäude durch Undichtigkeiten ausströmende Luft wird i.R. mit einer Wärmebildkamera sichtbar gemacht.

Aus WO 02/04912 A1 ist ein Verfahren zur Dichtheitsbestimmung eines Gebäudes bekannt, bei dem alle Öffnungen des Gebäudes verschlossen werden, während ein Ventilator weiterhin Luft aus dem Gebäude befördert. Die Dichtheit des Gesamtsystems wird mit Hilfe einer ermittelten Durchflussrate bestimmt.

Dieses Verfahren ist jedoch ungeeignet zur Ortung von Undichtigkeiten des Gebäudes, da lediglich quantitativ angegeben werden kann, dass Undichtigkeiten vorhanden sind, jedoch nicht an welcher Stelle. Desweiteren wird durch das Verfahren im Gebäude ein Unterdruck erzeugt, wobei durch Undichtigkeiten Luft von Außen in des Gebäude einströmt. Bekanntlich weist jedoch ein Luftstrom auf der entsprechenden Überdruckseite keine gerichtete Strömung auf, da die durch die Undichtigkeit einströmende Luft von allen Seiten des Außenraums eingesaugt wird. Die Ursache dieser Strömung, d.h. die Undichtigkeit, kann somit nicht geortet werden.

Stand der Technik bei Schienenfahrzeugen ist, dass zur Ortung von Undichtigkeiten die Hochgeschwindigkeitszüge während der Revision in die einzelnen Wagen aufgetrennt werden und jeder Wagen einzeln behandelt wird. Dazu wird jeder Wagen an den Wagenenden mit Schotts abgedichtet, mit Hilfe eines externen Gebläses mit Druck beaufschlagt und an allen verdächtigen Stellen (insbesondere Tür- und Fensterdichtungen) manuell auf Undichtigkeiten untersucht. Nachteile dieses Verfahrens sind:
1. das Verfahren erfordert einen externes Gebläse,
2. das Fahrzeug muss aufgetrennt und jeder Wagen einzeln untersucht werden,
3. durch das Anbringen der Schotts werden an den Wagenenden zusätzliche Undichtigkeiten erzeugt
4. durch das Auftrennen des Fahrzeugs werden Undichtigkeiten an den Dichtflächen der Übergänge zwischen den einzelnen Wagen nicht erfasst,
5. durch die manuelle Untersuchung können nur größere Undichtigkeiten entdeckt werden, die sich zudem an verdächtigen, d.h. an vorher bereits bekannten Stellen befinden müssen.

Das bisher verwendete Verfahren ist somit fehlerbehaftet sowie zeit- und personalaufwändig.

Aus EP 0 0 16 656 A1 ist ein Verfahren zur Leckprüfung von KraftfahrzeugKarosserien bekannt, bei der eine Gaszuführung und wenigstens ein Sensor zur Detektion des Gases, dessen physikalischer Größen oder sekundärer Begleiteffekte beim Durchtritt des Gases durch Leckstellen vorgesehen ist. Das Gas ist hierbei insbesondere mit einem Überdruck beaufschlagt sowie gekühlt.

Es ist somit Aufgabe der Erfindung, ein Verfahren anzugeben, bei dem mit geringem Aufwand zuverlässig alle Undichtigkeiten von Fahrzeugen ermittelt werden.

Diese Aufgabe wird erfindungsgemäß durch die in Anspruch 1 angegebenen Merkmale gelöst. Vorteile der Erfindung gegenüber dem Stand der Technik sind, dass das Fahrzeug als komplette Einheit ohne Auftrennung in einzelne Wagen sowie allein mit Bordmitteln untersucht werden kann.

Hierzu wird der gegenüber dem Luftvolumen des Außenraums erhöhte Luftdruck sowie die verminderte oder erhöhte Temperatur des Luftvolumens des Innenraums des Fahrzeuges mit Bordmitteln des Fahrzeuges erzeugt. Vorteil dieses Verfahrensmerkmals ist, dass, abgesehen von einem Ortungsgerät, keine zusätzlichen Geräte verwendet werden, d.h. es wird kein externes Gebläse und keine zusätzliche Heizung benötigt.

Nach Anspruch 2 handelt es sich bei den nach Anspruch 1 verwendeten Bordmitteln um die Klimaanlage des Fahrzeugs.

Nach Anspruch 3 wird zur Detektion der Undichtigkeiten eine - oder auch mehrere - Wärmebildkamera verwendet. Wird die Wärmebildkamera so angebracht, dass sie Bilder in senkrechter Draufsicht erzeugt, so ist eine Leckdetektion auch auf verwinkelten Oberflächen wie Nischen und während einer Vorbeifahrt des Fahrzeuges möglich.

Die Erfindung wird nachfolgend anhand eines Ausführungsbeispiels erläutert.

Die Luft im Innenraum eines Hochgeschwindigkeitszuges wird mit Hilfe der Klimaanlage - und somit mit Bordmitteln - auf ca. 40°C (bei einer Außentemperatur von ca. 10°C) aufgeheizt. In Gebieten oder Jahreszeiten mit hoher Außentemperatur (insbesondere 40°C) wird die Luft im Innenraum auf ca. 15°C abgekühlt. Gleichzeitig wird durch die Klimaanlage ein Überdruck im Innenraum des Zuges von 800 Pa erzeugt und für eine Stunde gehalten, wobei alle Zulüfter und die Heizung aktiv und alle Fortluftventile geschlossen sind. Im Anschluss daran wird der Zug an einer ortsfest aufgestellten Wärmebildkamera - deren Hauptachse des Objektivs senkrecht zur Außenhaut des Zuges ausgerichtet ist - mit Schrittgeschwindigkeit vorbeibewegt. Auch kleinere Undichtigkeiten des Fahrzeugs werden durch die Wärmebildkamera geortet, da eine Erwärmung bzw. Abkühlung der Luft im Außenbereich des Zuges aufgrund der durch die Undichtigkeiten ausströmenden wärmeren bzw. kühleren Luft aus dem Innenbereichs des Zuges erfolgt.

## Patentansprüche

1. Verfahren zur Ortung von Undichtigkeiten der Abdichtung eines Luftvolumens eines Innenraums gegenüber dem Luftvolumen eines Außenraums eines Fahrzeugs, wobei das Luftvolumen des Innenraums des Fahrzeuges auf einen höheren Luftdruck und eine tiefere oder höhere Temperatur gebracht wird als das Luftvolumen des Außenraums **dadurch gekennzeichnet, dass** der gegenüber dem Luftvolumen des Außenraums erhöhte Luftdruck sowie die verminderte oder erhöhte Temperatur des Luftvolumens des Innenraums des Fahrzeuges mit Bordmitteln des Fahrzeuges erzeugt wird.

2. Verfahren zur Ortung von Undichtigkeiten von Fahrzeugen nach Anspruch 2, **dadurch gekennzeichnet, dass** es sich bei den Bordmitteln des Fahrzeugs um die Klimaanlage des Fahrzeugs handelt.

3. Verfahren zur Ortung von Undichtigkeiten von Fahrzeugen nach einem oder mehreren der Ansprüche 1 bis 3, **dadurch gekennzeichnet, dass** eine - aufgrund des gegenüber dem Luftvolumens des Außenraums erhöhten Luftdrucks des Luftvolumens im Innenraum des Fahrzeuges - aus dem Innenraum des Fahrzeugs durch Undichtigkeiten entweichende und gegenüber der Luft des Außenraums des Fahrzeuges kältere oder wärmere Luft durch eine oder mehrere Wärmebildkameras detektiert wird.

## Claims

1. A method for detecting leaks on a seal that separates an interior air volume of a vehicle from an exterior air volume, wherein the pressure of the interior air volume of the vehicle is increased relative to that of the exterior air volume and the temperature of the interior air volume is adjusted lower or higher than that of the exterior air volume, **characterized in that** on-board means of the vehicle are used for increasing the interior air pressure relative to the exterior air pressure and for lowering or raising the temperature of the interior air volume of the vehicle.

2. The method for detecting leaks on vehicles according to Claim 2 [sic], **characterized in that** the on-board means of the vehicle consist of the vehicle air-conditioning system.

3. The method for detecting leaks on vehicles according to at least one of Claims 1-3 [sic], **characterized in that** air which escapes from the vehicle interior through leaks--due to the increased air pressure of the interior air volume of the vehicle relative to the exterior air volume--and is colder or warmer than the exterior air can be detected with the aid of one or more thermal imaging cameras.

## Revendications

1. Procédé de localisation d'inétanchéités du colmatage d'un volume d'air d'un habitacle par rapport au volume d'air de l'extérieur d'un véhicule, par lequel le volume d'air de l'habitacle du véhicule est amené à une pression d'air plus élevée et à une température plus basse ou plus élevée que le volume d'air de l'extérieur, **caractérisé en ce que** la pression d'air accrue par rapport au volume d'air de l'extérieur ainsi que la température réduite ou accrue du volume d'air de l'habitacle du véhicule sont générées à l'aide de moyens de bord du véhicule.

2. Procédé de localisation d'inétanchéités de véhicules selon la revendication 2, **caractérisé en ce qu'**il s'agit, en ce qui concerne les moyens de bord du véhicule, du climatiseur du véhicule.

3. Procédé de localisation d'inétanchéités de véhicules selon une ou plusieurs des revendications 1 à 3, **caractérisé en ce qu'**un air s'échappant de l'habitacle du véhicule et plus froid ou plus chaud que l'air de l'extérieur -en raison de la pression d'air du volume d'air de l'habitacle du véhicule accrue par rapport au volume d'air de l'extérieur - est détecté à l'aide d'une ou plusieurs caméras à images thermiques.
